(19) Europäisches Patentamt

European Patent Office

Office européen des brevets

(11) **EP 1 262 391 B1**

(12) **EUROPÄISCHE PATENTSCHRIFT**

(45) Veröffentlichungstag und Bekanntmachung des Hinweises auf die Patenterteilung:
**22.09.2004 Patentblatt 2004/39**

(51) Int Cl.⁷: **B62D 5/04**

(21) Anmeldenummer: **02010865.0**

(22) Anmeldetag: **15.05.2002**

(54) **Verfahren zum Betrieb einer Lenkeinrichtung mit einer Einrichtung zur Verstärkung der Lenkkraft und Lenkeinrichtung mit einer Einrichtung zur Verstärkung der Lenkkraft**

Method of operating a steering device with a device for increasing the steering effort

Méthode de mise en oeuvre d'un dispositif de direction avec un dispositif pour augmenter l'effort de braquage

(84) Benannte Vertragsstaaten:
**DE FR GB IT**

(30) Priorität: **31.05.2001 DE 10126470**

(43) Veröffentlichungstag der Anmeldung:
**04.12.2002 Patentblatt 2002/49**

(73) Patentinhaber: **SIEMENS AKTIENGESELLSCHAFT 80333 München (DE)**

(72) Erfinder:
• **Egger, Armin**
 **61350 Bad Homburg (DE)**
• **Grossmann, Reiner, Dr.**
 **65779 Kelkheim-Fischbach (DE)**

(56) Entgegenhaltungen:
**EP-A- 0 423 737         DE-A- 19 902 516**

**Beschreibung**

Die Erfindung bezieht sich auf ein Verfahren zum Betrieb einer Lenkeinrichtung mit einer Einrichtung zur Verstärkung der Lenkkraft, insbesondere für ein Kraftfahrzeug, bei der mittels einer Drehbewegung eines Lenkrads über eine Lenkwelle und ein Zahnradgetriebe eine Lenkstange axial angetrieben wird, wobei zumindest ein mechanischer Parameter der Lenkeinrichtung von einer Sensoreinheit erfasst wird und an eine Steuereinheit, die ein Rechenmodul und ein Speichermodul umfasst, übermittelt wird und ein der Einrichtung zur Verstärkung der Lenkkraft zugeordneter Elektromotor zum mittelbaren oder unmittelbaren Antrieb der Lenkstange von der Steuereinheit angesteuert wird, wobei in dem Rechenmodul in Abhängigkeit von dem zumindest einen mechanischen Parameter zumindest ein elektrischer Parameter für den Elektromotor ermittelt wird. Weiterhin bezieht sie sich auf eine Lenkeinrichtung mit einer Einrichtung zur Verstärkung der Lenkkraft, insbesondere für ein Kraftfahrzeug, bei der mittels einer Drehbewegung eines Lenkrads über eine Lenkwelle und ein Zahnradgetriebe eine Lenkstange axial antreibbar ist, wobei zumindest ein mechanischer Parameter des Lenkrads von einer Sensoreinheit erfassbar und an eine Steuereinheit übermittelbar ist, wobei ein der Einrichtung zur Verstärkung der Lenkkraft zugeordneter Elektromotor zum mittelbaren oder unmittelbaren Antrieb der Lenkstange von der Steuereinheit ansteuerbar ist.

Für Kraftfahrzeuge vorgesehene Lenkeinrichtungen weisen häufig Einrichtungen zur Verstärkung der Lenkkraft auf. Diese Einrichtungen zur Verstärkung der Lenkkraft sind dafür ausgelegt, eine vom Fahrer des Kraftfahrzeugs aufgebrachte Lenkkraft zu verstärken. Die Kraftverstärkung kann dabei hydraulisch oder elektromechanisch erfolgen. Lenkeinrichtungen für Kraftfahrzeuge mit Einrichtungen zur Verstärkung der Lenkkraft werden auch Servolenkungen genannt.

Sowohl bei einer hydraulischen Einrichtung zur Verstärkung der Lenkkraft als auch bei einer elektromechanischen Einrichtung zur Verstärkung der Lenkkraft wird üblicherweise mittels eines Drehmomentsensors das jeweils vom Fahrer auf das Lenkrad aufgebrachte aktuelle Drehmoment erfaßt. Ein das jeweils, aktuelle Drehmoment des Lenkrads kennzeichnendes Lenksignal, das von weiteren meßtechnisch erfaßten Parametern abhängen kann, wird dann mittels einer Regeleinheit an die Einrichtung zur Verstärkung der Lenkkraft übermittelt. Die Regeleinheit kann dabei eine ohnehin im Kraftfahrzeug vorhandene Regeleinheit sein. Die Einrichtung zur Verstärkung der Lenkkraft überträgt in Abhängigkeit von dem jeweils aktuellen Lenksignal und einem den jeweils aktuellen Zustand der Lenkstange kennzeichnenden Istsignal ein Drehmoment mittelbar oder unmittelbar auf die Lenkeinrichtung. Der Verstärkungsfaktor des durch den Fahrer auf das Lenkrad aufgebrachten Drehmoments kann in Abhängigkeit vom Fahrerwunsch und von der Fahrgeschwindigkeit und/oder weiteren Parametern fast beliebig eingestellt werden, sofern die Einrichtung zur Verstärkung der Lenkkraft den gewünschten Verstärkungsfaktor technisch zuläßt.

Je nachdem, wo die Einrichtung zur Verstärkung der Lenkkraft mit der Lenkeinrichtung gekoppelt ist, unterscheidet man grundsätzlich drei verschiedene Systeme. Ist die Einrichtung zur Verstärkung der Lenkkraft ein Elektromotor, der über ein Schneckengetriebe die Lenkwelle antreibt, so spricht man üblicherweise von COLPAS, wobei dieser Begriff eine Abkürzung für die englischen Wörter **col**umn **p**ower **a**ssistance **s**teering ist. Greift hingegen die Einrichtung zur Verstärkung der Lenkkraft mit einem Elektromotor und einem Getriebe in das Zahnradgetriebe ein, das die Lenkwelle mit der Lenkstange wirkschlüssig verbindet, so spricht man von PINPAS, wobei dieser Begriff eine Abkürzung für die englischen Wörter **pin p**osition **a**id **s**ystem ist. Schließlich kann die Einrichtung zur Verstärkung der Lenkkraft auch über einen Elektromotor und ein Getriebe, beispielsweise ein Kugelumlaufsystem, mit der Lenkstange verbunden sein, man spricht in diesem Falle von TUBEPAS, wobei dieser Begriff eine Abkürzung für die englischen Wörter **tube p**osition **a**id **s**ystem ist.

Eine hydraulische Einrichtung zur Verstärkung der Lenkkraft weist bedingt durch die Vielzahl der Komponenten einen komplexen Aufbau auf. Zu einer hydraulischen Einrichtung zur Verstärkung der Lenkkraft gehören neben den oben genannten Komponenten zumindest Hydraulikflüssigkeit, eine Pumpe für die Hydraulikflüssigkeit sowie Schläuche zum Führen der Hydraulikflüssigkeit. Aufgrund der Vielzahl der Komponenten ist die Montage einer hydraulischen Einrichtung zur Verstärkung der Lenkkraft mit einem erheblichen Montageaufwand verbunden. Nach der Montage der hydraulischen Einrichtung zur Verstärkung der Lenkkraft ist zudem ein Einfüllen von Hydraulikflüssigkeit in das System erforderlich. Da die Hydraulikflüssigkeit auslaufen und im Laufe der Zeit ihre Eigenschaften verändern kann, erfordert überdies ein Hydrauliksystem in bestimmten Zeitintervallen Wartungsarbeiten. Weiterhin ist eine hydraulische Einrichtung zur Verstärkung der Lenkkraft aufgrund des hohen Energiebedarfs der Pumpe für die Hydraulikflüssigkeit üblicherweise nur bei laufendem Verbrennungsmotor einsetzbar.

Im Gegensatz dazu weist eine Lenkeinrichtung mit einer elektromechanischen Einrichtung zur Verstärkung der Lenkkraft außer den oben genannten Komponenten als zentrales Element lediglich einen Elektromotor auf, dessen Drehmoment entweder über ein Schneckengetriebe an die Lenkwelle, über ein Getriebe an das Zahnradgetriebe oder über ein Getriebe unmittelbar auf die Lenkstange übertragen wird. Der Elektromotor kann dabei schon vor dem Einbau in das Kraftfahrzeug auf der Lenkstange, dem Zahnradgetriebe oder der Lenkstange angeordnet sein, um dann gemeinsam mit der Lenkstange in das Kraftfahrzeug eingebaut zu werden. Alternativ kann der Elektromotor Bestandteil einer Gesamtkonstruktion sein. Weiterhin erweist sich üblicherweise eine elektromechanische Einrichtung zur Verstärkung der Lenkkraft als überwiegend wartungsfrei. Auch weist eine elektromechanische Einrichtung zur Verstärkung der Lenkkraft einen besonders geringen Kraftstoffverbrauch auf und kann daher auch bei stillstehendem Verbrennungsmotor zumindest für einen beschränkten Zeitraum noch voll funktionsfähig sein. Aufgrund des geringen Kraftstoffverbrauchs ist eine elektromechanische Einrichtung zur Verstärkung der Lenkkraft bevorzugt in Fahrzeugen mit kleinerer und mittlerer Motorleistung einsetzbar.

Für Kraftfahrzeuge vorgesehene Einrichtungen zur Verstärkung der Lenkkraft weisen üblicherweise eine Stromregelung auf. Dabei wird der jeweils dem Elektromotor zuzuführende Strom gemessen. Der Messwert wird als Istwert mit einem Sollwert verglichen und in Abhängigkeit der Differenz zwischen dem Sollwert und dem Istwert erfolgt dann eine Erhöhung oder eine Erniedrigung des dem Elektromotor zuzuführenden Stroms.

Eine solche Stromregelung ist aus der DE-19902516-A1 bekannt. Bei dieser Regelung wird zur Vermeidung von wärmebedingten Schwankungen der Lenkunterstützungscharakteristik der Sollwert des Motorstroms mit einer Motortemperatur korrigiert, und der Stromregler kontrolliert dann den Iststrom des Motors in Übereinstimmung mit dem temperaturkorrigierten Sollstrom.

zum Antrieb einer Einrichtung zur Verstärkung der Lenkkraft werden beispielsweise elektrisch kommutierte Elektromotoren eingesetzt, die auch als BLDC oder Brushless DC-Motoren bezeichnet werden. Diese BLDC-Motoren werden üblicherweise im Blockstromverfahren angesteuert, was zu Ungleichförmigkeiten in der Bestromung des BLDC-Motors und damit des von dem BLDC-Motor erzeugten und auf die Einrichtung zur Verstärkung der Lenkkraft übertragenen mechanischen Momentes führt. Diese Erscheinung wird auch als Momentenrippel oder Pendelmomente bezeichnet. Daher ist insbesondere bei einem mit drei Strangströmen in Drehstrom betriebenen BLDC-Motor das Umschalten der Strangströme beim Kommutieren in der Weise zu kontrollieren, dass die tatsächlichen Strangströme einzeln gemessen werden, womit jedoch ein erheblicher messtechnischer Aufwand zur Regulierung der Strangströme des Elektromotors verbunden ist.

Für die Messung der Strangströme des Elektromotors der Einrichtung zur Verstärkung der Lenkkraft ist die Verwendung von elektrischen Bausteinen üblich, beispielsweise Strom-Wandler, die zu einem für die Gesamtkalkulation besonders hohen Preis käuflich sind und daher den Preis für die Einrichtung zur Verstärkung der Lenkkraft erheblich in die Höhe treiben. Anderenfalls gestaltet sich häufig die Messung des Stromes als schwierig, da der üblicherweise zur Messung des Stromwertes verwendete Shunt aufgrund der getakteten Anschlüsse messtechnisch problematisch ist.

Der Erfindung liegt daher die Aufgabe, ein Verfahren der oben genannten Art anzugeben, das besonders zuverlässig eine kontinuierliche Bestromung des der Einrichtung zur Verstärkung der Lenkkraft zugeordneten Elektromotors gewährleistet und zudem messtechnisch besonders einfach zu realisieren ist. Weiterhin ist es Aufgabe der Erfindung, eine zur Durchführung des Verfahrens geeignete Vorrichtung der oben genannten Art anzugeben.

Diese Aufgabe wird in Bezug auf das Verfahren erfindungsgemäß dadurch gelöst, dass aufgrund des zumindest einen erfassten mechanischen Parameters und eines in der Steuereinheit abgelegten Motormodells der Elektromotor angesteuert wird, indem aus dem zumindest einen elektrischen Parameter unter Hinzuziehung charakteristischer Kennwerte W wiederum Konstanten bestimmt werden, wobei die charakteristischen Kennwerte W das Betriebsverhalten des Elektromotors kennzeichnen, und anschließend mittels der Konstanten und in dem Speichermodul gespeicherter Daten die dem Elektromotor zuzuführende Ansteuergröße berechnet wird.

Die Erfindung geht dabei in bezug auf das Verfahren von der Überlegung aus, daß ein Verfahren, das besonders zuverlässig eine kontinuierliche Bestromung des der Einrichtung zur Verstärkung der Lenkkraft zugeordneten Elektromotors zuverlässig gewährleistet und zudem auch meßtechnisch besonders einfach zu realisieren ist, von den aktuellen Betriebsbedingungen der Lenkeinrichtung abhängen sollte. Dabei sollte zum Charakterisieren des jeweils aktuellen Zustands der Lenkeinrichtung zumindest ein mechanischer Parameter der Lenkeinrichtung aktuell erfassbar sein. Mittels dieses zumindest einen erfaßten mechanischen Parameters könnte dann ein Betrieb der Einrichtung zur Verstärkung der Lenkkraft erfolgen. Dabei könnte aufgrund des zumindest einen erfaßten mechanischen Parameters der Lenkeinrichtung ein zu erfassender Kontrollparameter der Einrichtung zur Verstärkung Lenkkraft nicht zwingend erforderlich sein. Dies ermöglicht den Übergang von einer Stromregelung auf eine Stromsteuerung und gewährleistet einerseits eine kontinuierliche Bestromung des Elektromotors und andererseits einen besonders geringen meßtechnischen Aufwand.

Die Stromsteuerung umfaßt jedoch die Problematik, daß für ein besonders komplexes Kennfeld an möglichen Betriebszuständen der Lenkeinrichtung jeweils ein bestimmter Stromwert festgelegt werden müßte. Die möglichen Betriebszustände der Lenkeinrichtung lassen sich jedoch aus dem zumindest einen erfaßten mechanischen Parameter ermittelbaren Konstanten und abgespeicherten Daten angemessen beschreiben. Daher ist es möglich, aufgrund des zumindest einen erfaßten mechanischen Parameters der Lenkeinrichtung den Elektromotor anzusteuern.

Vorteilhafterweise wird mittels der Steuereinheit eine Spannung berechnet, die mittels einer Spannungsquelle dem Elektromotor zugeführt wird. Die Ansteuerung des Elektromotors mit Spannung resultiert in einem Strom, der dem Elektromotor eingeprägt wird. Alternativ kann jedoch auch eine Stromquelle zur Ansteuerung des Elektromotors eingesetzt werden.

Vorteilhafterweise ist der zumindest eine elektrische Parameter des Elektromotors der Soll-Strom. Der Soll-Strom gibt an, welches Betriebsverhalten der Elektromotor bei dem Wert des Soll-Stroms aufweist. Ist der Steuereinheit der Wert des Soll-Stroms bekannt, so kann mittels einer Stromquelle oder einer Spannungsquelle der Elektromotor besonders zuverlässig angesteuert werden.

Vorteilhafterweise wird außer dem elektrischen Parameter zusätzlich noch ein mechanischer Parameter für den Elektromotor bestimmt, der vorteilhafterweise die Soll-Drehzahl des Elektromotors ist. Der Strom des Elektromotors ist ein Maß für das von dem Elektromotor mittels der Einrichtung zur Verstärkung der Lenkkraft auf die Lenkwelle, das Zahnradgetriebe oder die Lenkstange übertragene mechanische Moment. Der Soll-Strom entspricht also einem bestimmten, auf die Lenkeinrichtung zu übertragenden Drehmoment.

Vorteilhafterweise ist der zumindest eine mechanische Parameter der Lenkeinrichtung das Lenkdrehmoment des Lenkrads und die Lenkdrehzahl des Lenkrads. Mittels des Lenkdrehmoments des Lenkrads und der Lenkdrehzahl des Lenkrads ist der jeweils aktuelle Betriebszustand des Lenkrads und damit der Lenkeinrichtung besonders zuverlässig charakterisierbar.

Vorteilhafterweise sind die gespeicherten Daten Nennkurven, wobei nach einer Multiplikation der Nennkurven mit den Konstanten eine Addition der Produkte zur Berechnung des für den Elektromotor zu erzeugenden Stroms durchgeführt wird. Statt jeweils aktuelle Kennfelder für die Konstanten zu berechnen, werden in einem Speichermodul hinterlegte Nennkurven eingesetzt, um den zu erzeugenden Strom für den Elektromotor zu ermitteln. Damit ist zuverlässig gewährleistet, daß in ausreichend kurzer Zeit eine Berechnung des dem Elektromotor zuzuführenden Stroms erfolgt. Würde alternativ der für den Elektromotor zu erzeugende Strom mit Hilfe von Kennfeldern berechnet, die jeweils aktuell für alle Betriebszustände der Lenkeinrichtung erzeugt werden würden, so wäre hierfür deutlich mehr Zeit erforderlich, so daß bei einer nachfolgenden Bestromung des Elektromotors häufig der jeweilige Stromwert schon nicht mehr dem aktuellen Zustand der Lenkeinrichtung entsprechen würde. Zusätzlich kann jedoch, beispielsweise zur Langzeit Charakterisierung der Einrichtung zur Verstärkung der Lenkkraft, zu allen Betriebszuständen der Einrichtung zur Verstärkung der Lenkkraft ein Kennfeld erzeugt werden.

Vorteilhafterweise sind aus dem Soll-Strom und der Soll-Drehzahl die Konstanten mit Hilfe von charakteristischen Kennwerten des Elektromotors ermittelt. Dabei sind charakteristische Kennwerte des Elektromotors vorteilhafterweise die Betriebsspannung des Elektromotors oder die Temperatur des Elektromotors. Der Elektromotor ist über seine aktuelle Betriebsspannung und seine Temperatur besonders zuverlässig charakterisierbar. Dabei kann verschiedenen Betriebsspannungen und/oder Temperaturen des Elektromotors jeweils in eindeutiger Weise ein Soll-Strom und eine Soll-Drehzahl zugeordnet werden.

Bezüglich der Vorrichtung wird die Aufgabe erfindungsgemäß dadurch gelöst, daß der Elektromotor von der Steuereinheit gemäß dem obigen Verfahren ansteuerbar ist.

Vorteilhafterweise weist dabei die Einrichtung zur Verstärkung der Lenkkraft einen Kugelumlaufmechanismus auf, wobei der Elektromotor zum Antrieb des Kugelumlaufmechanismus vorgesehen ist, und wobei durch eine Drehbewegung des Kugelumlaufmechanismus die Lenkstange zusätzlich zu der Drehbewegung des Lenkrads axial antreibbar ist.

Vorteilhafterweise weist die Einrichtung zur Verstärkung der Lenkkraft ein Getriebe auf, wobei der Elektromotor zum Antrieb des Getriebes vorgesehen ist, und wobei über das Getriebe das Zahnradgetriebe zusätzlich zu der Drehbewegung des Lenkrads axial antreibbar ist.

Vorteilhafterweise weist die Einrichtung zur Verstärkung der Lenkkraft ein Schneckengetriebe auf, wobei der Elektromotor zum Antrieb des Schneckengetriebes vorgesehen ist, und wobei über das Schneckengetriebe die Lenkwelle zusätzlich zu der Drehbewegung des Lenkrads axial antreibbar ist.

Die mit der Erfindung erzielten Vorteile bestehen insbesondere darin, daß durch eine kontinuierliche Bestromung des der Einrichtung zur Verstärkung der Lenkkraft zugeordneten Elektromotors ein konstantes mechanisches Moment der Lenkeinrichtung einprägbar ist. Hierzu wird in der Steuereinheit ein vollständiges Motormodell abgelegt, das in Echtzeit genauso wie ein dreidimensionales Kennfeld Spannungskurven für den Strom des Motors erzeugt. Die Stromsteuerung erfolgt dabei ohne Rückmeldung des tatsächlich in den Elektromotor eingeprägten Stroms. Dabei kann der tatsächliche Strom des Elektromotors, beispielsweise zu Kontrollzwecken, zusätzlich gemessen werden.

Ein Ausführungsbeispiel der Erfindung wird anhand einer Zeichnung näher erläutert. Darin zeigen die Figuren:

Fig. 1: eine Lenkeinrichtung mit einer Einrichtung zur Verstärkung der Lenkkraft, die an der Lenkstange angeordnet ist,

Fig. 2: schematisch eine Lenkeinrichtung mit einer Einrichtung zur Verstärkung der Lenkkraft, die an der Lenkwelle angeordnet ist,

Fig. 3: schematisch eine Lenkeinrichtung mit einer Einrichtung zur Verstärkung der Lenkkraft, die an einem Zahnradgetriebe angeordnet ist, das die Lenkwelle mit der Lenkstange verbindet und

Fig. 4: schematisch einen Zyklus des Verfahrens zum Betrieb einer Lenkeinrichtung.

Einander entsprechende Teile sind in allen Figuren mit den gleichen Bezugszeichen versehen.

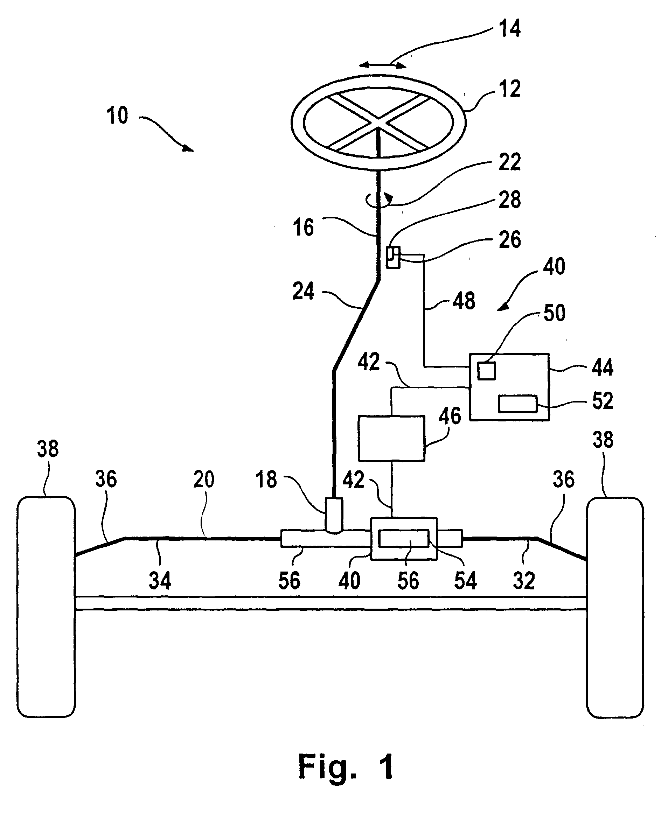

Die Lenkeinrichtung 10 gemäß Fig. 1 ist in einem Kraftfahrzeug angeordnet, das in der Zeichnung nicht näher dargestellt ist. Bei der Lenkeinrichtung 10 ist über eine Drehbewegung eines Lenkrads 12, angedeutet durch den Pfeil 14, mittels einer Lenkwelle 16 und eines Zahnradgetriebes 18 eine Lenkstange 20 axial antreibbar. Die Lenkwelle 16 ist mittels des Lenkrads 12 mit und gegen den Uhrzeigersinn verdrehbar, was durch den Pfeil 22 angeordnet ist. Die Lenkwelle 16 gemäß Fig. 1 ist über ein kartanisches Mittelstück 24 abgewinkelt. Alternativ kann die Lenkwelle 16 jedoch auch als starre Lenkwelle 16 ausgebildet sein. Im oberen Bereich der Lenkwelle 16 ist in einem Gehäuse 26 ein Sensor 28 zur Erfassung des jeweils aktuellen Drehmoments der Lenkwelle 16 und damit des Lenkrads 12 angeordnet. Unterhalb des Sensors 28 mündet die Lenkwelle 16 in das Zahnradgetriebe 18, das die Lenkwelle 16 mit der Lenkstange 20 verbindet. Das Zahnradgetriebe 18 überträgt eine Drehbewegung des Lenkrads 12 mittels der Lenkwelle 16 auf die Lenkstange 20.

Die Lenkstange 20 ist an ihrem ersten Ende 32 und an ihrem zweiten Ende 34 jeweils mit einer Spurstange 36 verbunden. Dabei kann die Verbindung zwischen dem ersten Ende 32 und dem zweiten Ende 34 der Lenkstange 20 und den jeweiligen Spurstangen 36 mittels eines Faltenbalgs erfolgen, der diese Verbindung vor Verunreinigungen schützt und in der Zeichnung nicht näher dargestellt ist. Die Spurstangen 36 wiederum sind jeweils mit einem Rad 38 des Kraftfahrzeugs verbunden.

Zwischen dem ersten Ende 32 der Lenkstange 20 und dem Zahnradgetriebe 18 ist eine elektrische Einrichtung 40 zur Verstärkung der Lenkkraft angeordnet. Die Einrichtung 40 zur Verstärkung der Lenkkraft ist über elektrische Verbindungsmittel 42 mit einer Spannungserzeugungseinheit 46 verbunden. Die Spannungerzeugungseinheit wiederum ist über elektrische Verbindungsmittel 42 mit einer Steuereinheit 44 verbunden. Die Steuereinheit 44 ist über eine Rückmeldungsleitung 48 mit dem an der Lenkwelle 16 in einem Gehäuse 26 angeordneten Sensor 28 verbunden. Die Steuereinheit 44 umfaßt ein Rechenmodul 50 und ein Speichermodul 52.

Die Einrichtung 40 zur Verstärkung der Lenkkraft weist einen Elektromotor 54 auf. Beim Betrieb des Elektromotors 54 ist die Lenkstange 20 über einen Kugelumlaufmechanismus 56 zusätzlich zu der Drehbewegung des Lenkrads 12 von dem Elektromotor 52 antreibbar. Der Kugelumlaufmechanismus ist dabei zwischen dem Elektromotor 52 und der Lenstange 20 oder alternativ unter dem Elektromotor 52 angeordnet, was in de Zeichnung nicht näher dargestellt ist. Alternativ zu dem Kugelumlaufmechanismus 56 kann der Elektromotor 54 auch über ein Getriebe oder ein Zahnradsystem wirkschlüssig mit der Lenkstange 20 verbunden sein. Dabei wird der Elektromotor 54 kontinuierlich von der Spannungserzeugungseinheit 46 bestromt, die einen Strom liefert, der zu der Ausgangsspannung der Spannungserzeugungseinheit 46 in einer bestimmten Beziehung steht.

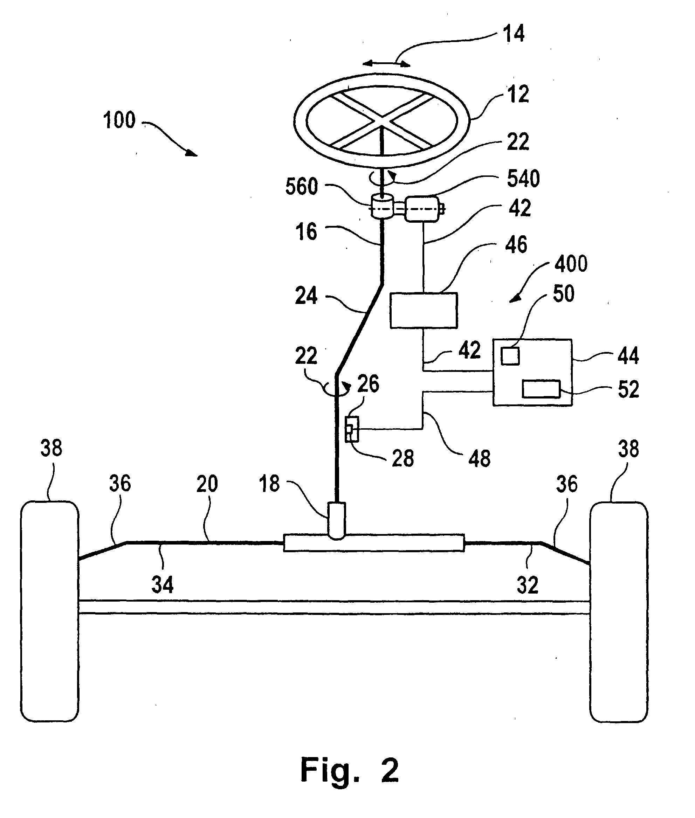

Fig. 2 zeigt eine Lenkeinrichtung 101, die weitestgehend mit der Lenkeinrichtung 10 gemäß Fig. 1 übereinstimmt. Die Lenkeinrichtung 100 gemäß Fig. 2 unterscheidet sich jedoch von der Lenkeinrichtung gemäß Fig. 1 maßgeblich dadurch, daß die Einrichtung 400 zur Verstärkung der Lenkkraft nicht an der Lenkstange 20 sondern an der Lenkwelle 16 angeordnet ist. Die Einrichtung 400 zur Verstärkung der Lenkkraft umfaßt dabei einen Elektromotor 540. Der Elektromotor 540 ist über ein Schneckengetriebe 560 wirkschlüssig mit der Lenkstange 20 verbunden. Alternativ kann die Einrichtung 400 zur Verstärkung der Lenkkraft jedoch auch ein Getriebe umfassen, das nicht ausschließlich oder gar kein Schneckengetriebe 560 ist. Beim Betrieb der Einrichtung 400 zur Verstärkung der Lenkkraft treibt der Elektromotor 540 die Lenkwelle 16 zusätzlich zu einer Drehbewegung des Lenkrads 12 über das Schneckengetriebe 560 an.

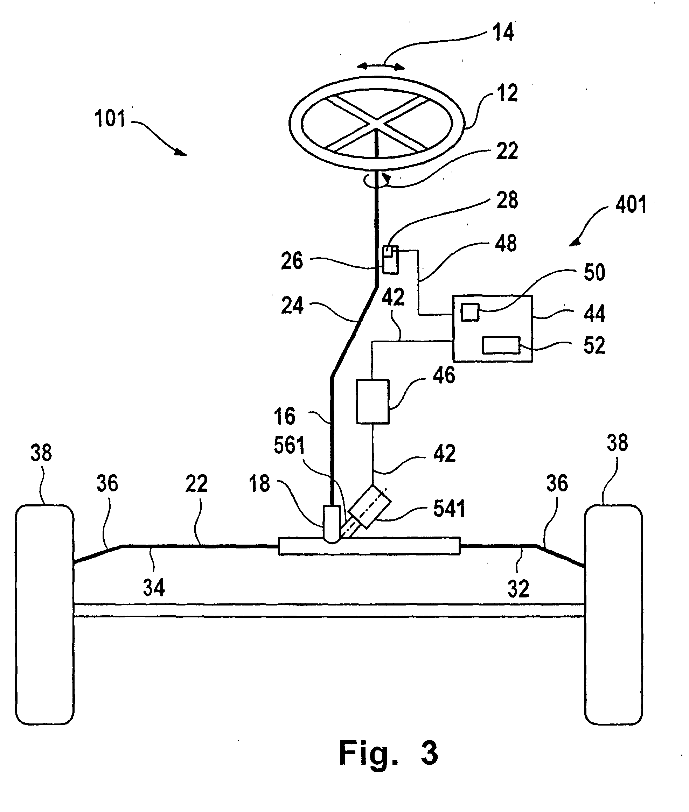

Auch Fig. 3 zeigt eine Lenkeinrichtung 101, die weitestgehend den in den Figuren 1 und 2 gezeigten Lenkeinrichtungen 10 bzw. 100 entspricht, sich jedoch von den in den Figuren 1 und 2 gezeigten Lenkeinrichtungen 10 und 100 maßgeblich dadurch unterscheidet, daß die Einrichtung 401 zur Verstärkung der Lenkkraft an dem Zahnradgetriebe 18 mittels eines Getriebes 561 angeordnet ist. Dabei umfaßt auch die Einrichtung 401 zur Verstärkung der Lenkkraft einen Elektromotor 541. Der Elektromotor 541 treibt zusätzlich zu einer Drehbewegung des Lenkrads 12 über das Getriebe 561 das Zahnradgetriebe 18 und damit die Lenkstange 20 an.

Den Lenkeinrichtungen 10, 100 und 101 ist gemeinsam, daß alle drei mittels eines Verfahrens zum Betreiben einer Lenkeinrichtung betreibbar sind. Dieses Verfahren zeichnet sich dadurch aus, daß mittels der Steuereinheit 44 in Abhängigkeit von zumindest einem mechanischen Parameter P der Lenkeinrichtung 10, 100 bzw. 101 der Elektromotor 54 bzw. 540 oder 541 der jeweiligen Lenkeinrichtung 10, 100 bzw. 101 angesteuert wird. Der zumindest eine Parameter P ist in dieses Ausführungsbeispiel das Lenkdrehmoment $T_L$ und die Lenkdrehzahl $N_L$ des Lenkrads 12. Diese beiden mechanischen Parameter P sind von dem in dem Gehäuse 26 angeordneten Sensor 28 erfaßbar, der hierfür zwei Module aufweist, die in der Zeichnung nicht näher dargestellt sind.

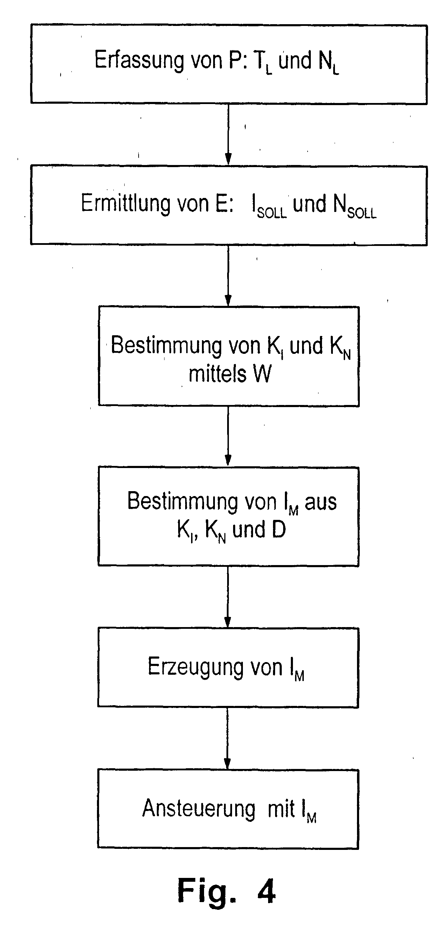

Das Verfahren läuft in Zyklen ab. Nach Durchlaufen eines Zyklusses wird wieder von vorne begonnen. Ein Zyklus des Verfahrens zum Betreiben einer der Lenkeinrichtungen 10, 100 oder 101 ist schematisch in Fig. 4 dargestellt.

Das Verfahren beginnt damit, daß zunächst der zumindest eine mechanische Parameter P des Lenkrads 12 erfaßt wird. In diesem Ausführungsbeispiel bedeutet das die Erfassung der Parameter Lenkdrehmoment $T_L$ des Lenkrads 12 und Lenkdrehzahl $N_L$ des Lenkrads 12 mittels des Sensors 28. Die von dem Sensor 28 erfaßten mechanischen Parameter P, also das Lenkdrehmoment $T_L$ des Lenkrads 12 und die Lenkdrehzahl $N_L$ des Lenkrads 12, werden dann über die Rückmeldungseitung 48 an die Steuereinheit 44 übermittelt. In der Steuereinheit 44 erfolgt dann in dem Rechenmodul 50 mittels des Lenkdrehmoments $T_L$ des Lenkrads 12 und der Lenkdrehzahl $N_L$ des Lenkrads 12 die Ermittlung des zumindest einen elektrischen Parameters E für den Elektromotor 54, 540, 541. In diesem Ausführungsbeispiel ist der zumindest eine elektrische Parameter E des Elektromotors 54, 540,541 ein Soll-Strom $I_{SOLL}$ und eine Soll-Drehzahl $N_{SOLL}$ für den Elektromotor 54, 540,541. Dabei ist zu beachten, daß der Elektromotor 54, 540 bzw. 541 mit Drehstrom zu betreiben ist. Der dem Elektromotor 54, 540 bzw. 541 zuzuführende Strom I setzt sich also aus drei Teilströmen zusammen. Es erweist sich jedoch als ausreichend nur den Soll-Strom $I_{SOLL}$ für einen der Stränge zu bestimmen und dann daraus die beiden anderen Strangströme mittels Phasenverschiebung zu ermitteln.

Aus dem Soll-Strom $I_{SOLL}$ und der Soll-Drehzahl $N_{SOLL}$ des Elektromotors 54 bzw. 540 oder 541 erfolgt dann eine Bestimmung von Konstanten $K_I$ und $K_N$. Dabei ist die Konstante $K_I$ dem Soll-Strom $I_{SOLL}$ und die Konstante $K_N$ der Soll-Drehzahl $N_{SOLL}$ zugeordnet. Die Bestimmung der Konstanten $K_I$ und $K_N$ erfolgt dabei mittels charakteristischer Werte W des Elektromotors 54 bzw. 540 oder 541. Charakteristische Werte W des Elektromotors 54 bzw. 540 oder 541 sind hierbei sowohl die Betriebsspannung des Elektromotors 54 bzw. 540 oder 541 als auch die Temperatur des Elektromotors 54 bzw. 540 oder 541. Diese beiden charakteristischen Werte W des Elektromotors 54 bzw. 540 oder 541 beeinflussen das Betriebsverhalten des Elektromotors 540 bzw. 541 maßgeblich. Da sowohl die Betriebsspannung des Elektromotors 54 bzw. 540 oder 541 und die Betriebstemperatur T des Elektromotors 54 bzw. 540 oder 541 dazu neigen, zu driften, sollten diese beiden charakteristischen Werte W des Elektromotors 54 bzw. 540 oder 541 in festen Zeitabständen jeweils neu erfaßt werden.

Mittels der Konstanten $K_I$ und $K_N$ und gespeicherter Daten D, die als Nennkurven ausgebildet und in dem Speichermodul 52 hinterlegt sind, erfolgt dann eine Berechnung der Spannung, die zur Erzeugung eines bestimmten Stromwertes $I_M$ vorgesehen ist, der dem Elektromotor 54 bzw. 540 oder 541 zuzuführen ist.

Die Berechnung der dem Elektromotor 54 bzw. 540 oder 541 zuzuführenden Spannung bzw. Stroms $I_M$ beruht dabei auf einer Linearisierung einer zeitabhängigen Gleichung für die Spannung U der Spannungserzeugungseinheit 46. Hierbei wird von einer allgemeinen Spannungsgleichung ausgegangen, die die in der Spannungserzeugungseinheit 46 erzeugte Spannung mit Hilfe von Parametern des Elektromotors beschreibt und wie folgt lautet:

$$U = R * i(t) + L\,\frac{di\,(t)}{dt} + u_P\,(t)$$

In dieser Gleichung sind die Variablen wie folgt belegt:

| | |
|---|---|
| U | Spannung der Spannungserzeugungseinheit 46, |
| R | Widerstand des Elektromotors 54, 540, 541, |
| i(t) | Zeitabhängiger Strom des Elektromotors 54, 540, 541, |
| L | Induktivität des Elektromotors 54, 540, 541, |
| di(t)/dt | mathematische Ableitung des zeitabhängigen Stroms nach der Zeit, |
| up(t) | zeitabhängige Polradspannung. |

Nun werden in der obigen Gleichung Konstanten $K_I$ und $K_N$ für den Strom I und die Drehzahl N eingeführt. Diesen Konstanten $K_I$ und $K_N$ werden normierte Nennkurven zugeordnet und zwar:

| | |
|---|---|
| R * I : | Spannungskurve für den jeweiligen Strangstrom, |
| L: | Differentielle Spannungskurve, |
| $U_P$ | Polradspannungskurve. |

Damit ist nun die obige Gleichung parametrisiert und beschreibt bei geeigneter Wahl der Konstanten $K_I$ und $K_N$ den dem Elektromotor 54, 540, 541 einzuprägenden Strom $I_M$ mittels einer in der Spannungsquelle 58 zu erzeugenden Spannung U. Die Gleichung liest sich mit diesen Änderungen wie folgt:

$$U_{U,V,W} = R * I_{U,V,W}^{X} * K_I + L_{U,V,W}^{X} * K_I * K_N + Up_{U,V,W}^{X} * K_N$$

Hierbei stehen U, V und W für den jeweiligen Strangstrom und das x steht für die Schrittweite der Auflösung der jeweiligen Einrichtung zur Verstärkung der Lenkkraft 40, 400 bzw. 401. Da der Elektromotor 54, 540 bzw. 541 der Figuren 1, 2 bzw. 3 mit Drehstrom betreibbar ist, muß für jeden der drei Stränge U, V und W des Drehstroms gesondert eine Strangspannung berechnet werden. Hierzu wird gemäß der zweiten Gleichung die Strangspannung für einen einzelnen Strang berechnet. Die Strangspannungen der einzelnen Stränge sind daraus mittels Phasenverschiebung ermittelbar. Dabei haben die abgelegten Stromkurven als Randbedingung die Addition zu Null. Über die drei Multiplikationen und Additionen wird als Ausgabe ein dreidimensionales Kennfeld generiert. Die Strangspannung hängt dabei von der Drehzahl, dem Strom und der Zeit oder der Rotorlage ab.

Das Verfahren zum Betreiben einer Lenkeinrichtung 10 bzw. 100 oder 101 mit einer Einrichtung 40 bzw. 400 oder 401 zur Verstärkung der Lenkkraft weist also eine Steuereinheit 44 auf, die in Abhängigkeit des von dem Sensor 28 übermittelten zumindest einen mechanischen Parameter P einen dem Elektromotor 54 bzw. 540 oder 541 zuzuführender Strom berechnet. Dabei wird aus Zeitgründen auf eine Generierung von dynamischen Kennfeldern verzichtet. Stattdessen werden statische Kenngrößen herangezogen, um in besonders kurzer Zeit die für einen dem Elektromotor 54 bzw. 540 oder 541 einzuprägenden Strom $I_M$ erforderliche Spannung U zu berechnen.

## Patentansprüche

1. Verfahren zum Betreiben einer Lenkeinrichtung (10, 100, 101) mit einer Einrichtung (400) zur Verstärkung der Lenkkraft, insbesondere für ein Kraftfahrzeug, bei der mittels einer Drehbewegung eines Lenkrads (12) über eine Lenkwelle (16) und ein Zahnradgetriebe (18) eine Lenkstange (20) axial angetrieben wird, wobei zumindest ein mechanischer Parameter (P) der Lenkeinrichtung (10, 100, 101) von einer Sensoreinheit (28) erfasst wird und an eine Steuereinheit (44), die ein Rechenmodul (50) und ein Speichermodul (52) umfasst, übermittelt wird und ein der Einrichtung (400) zur Verstärkung der Lenkkraft zugeordneter Elektromotor (54, 540, 541) zum mittelbaren oder unmittelbaren Antrieb der Lenkstange (20) von der Steuereinheit (44) angesteuert wird, wobei in dem Rechenmodul (50) in Abhängigkeit von dem zumindest einen mechanischen Parameter (P) zumindest ein elektrischer Parameter (E) für den Elektromotor (54, 540, 541) ermittelt wird, **dadurch gekennzeichnet, dass** aufgrund des zumindest einen erfassten mechanischen Parameters (P) und eines in der Steuereinheit (44) abgelegten Motormodells der Elektromotor angesteuert wird, indem, aus dem zumindest einen elektrischen Parameter (E) unter Hinzuziehung charakteristischer Kennwerte W wiederum Konstanten ($K_I$) und ($K_N$) bestimmt werden, wobei die charakteristischen Kennwerte W das Betriebsverhalten des Elektromotors kennzeichnen, und anschließend mittels der Konstanten ($K_I$) und ($K_N$) und in dem Speichermodul (52) gespeicherter Daten (D) die dem Elektromotor (54, 540, 541) zuzuführende Ansteuergröße berechnet wird.

2. Verfahren zum Betreiben einer Lenkeinrichtung (10, 100, 101) nach Anspruch 1, **dadurch gekennzeichnet, dass** mittels der Steuereinheit (44) eine Spannung ($U_M$) berechnet wird, die mittels einer Spannungsquelle (58) dem Elektromotor (54, 540, 541) zugeführt wird.

3. Verfahren zum Betreiben einer Lenkeinrichtung (10, 100, 101) nach Anspruch 1 oder 2, **dadurch gekennzeichnet, dass** der zumindest eine elektrische Parameter (E) der Soll-Strom ($I_{Soll}$) für den Elektromotor (54, 540, 541) ist.

4. Verfahren zum Betreiben einer Lenkeinrichtung (10, 100, 101) nach einem der Ansprüche 1 bis 3, **dadurch gekennzeichnet, daß** außer dem elektrischen Parameter (E) zusätzlich noch ein weiterer, insbesondere mechanischer, Parameter (E) für den Elektromotor (54, 540, 541) bestimmt wird.

5. Verfahren zum Betreiben einer Lenkeinrichtung (10, 100, 101) nach Anspruch 4, **dadurch gekennzeichnet, dass** der zusätzliche, insbesondere mechanische Parameter (E) die Soll-Drehzahl ($N_{Soll}$) für den Elektromotor (54, 540, 541) ist.

6. Verfahren zum Betreiben einer Lenkeinrichtung (10, 100, 101) nach einem der Ansprüche 1 bis 5, **dadurch gekennzeichnet, dass** der zumindest eine mechanische Parameter (P) der Lenkeinrichtung (10, 100, 101) das Lenkdrehmoment ($T_L$) des Lenkrads (12) und die Lenkdrehzahl ($N_L$) des Lenkrads (12) sind.

7. Verfahren zum Betreiben einer Lenkeinrichtung (10, 100, 101) nach einem der Ansprüche 1 bis 6, **dadurch gekennzeichnet, dass** die gespeicherten Daten (D) Nennkurven sind.

8. Verfahren zum Betreiben einer Lenkeinrichtung (10, 100, 101) nach Anspruch 7, **dadurch gekennzeichnet, dass** in dem Rechenmodul (50) nach einer Multiplikation der Konstanten ($K_I$) und ($K_N$) mit den Nennkurven eine Addition der Produkte zur Berechnung der für den Elektromotor (54, 540, 541) in der Spannungsquelle (46) zu erzeugenden Spannung ($U_M$) durchgeführt wird.

9. Verfahren zum Betreiben einer Lenkeinrichtung (10, 100, 101) nach Anspruch 9 **dadurch gekennzeichnet, dass** ein charakteristischer Kennwert (W) des Elektromotors (54, 540, 541) die Betriebsspannung ($U_B$) des Elektromotors (54, 540, 541) ist.

10. Verfahren zum Betreiben einer Lenkeinrichtung (10, 100, 101) nach Anspruch 9 oder 10 **dadurch gekennzeichnet, dass** ein charakteristischer Kennwert (W) des Elektromotors (54, 540, 541) die Temperatur (T) des Elektromotors (54, 540, 541) ist.

11. Lenkeinrichtung (10, 100, 101) mit einer Einrichtung (40, 400, 401) zur Verstärkung der Lenkkraft, insbesondere für ein Kraftfahrzeug, bei der mittels einer Drehbewegung eines Lenkrads (12) über eine Lenkwelle (16) und ein Zahnradgetriebe (18) eine Lenkstange (20) axial antreibbar ist, wobei zumindest ein mechanischer Parameter (P) des Lenkrads (12), des Zahnradgetriebes (18) oder der Lenkstange (20) von einer Sensoreinheit (28) erfaßbar und an eine Steuereinheit (44) übermittelbar ist, wobei ein der Einrichtung (40, 400, 401) zur Verstärkung der Lenkkraft zugeordneter Elektromotor (54, 540, 541) zum mittelbaren oder unmittelbaren Antrieb der Lenkstange (20) von der Steuereinheit (44) ansteuerbar ist, **dadurch gekennzeichnet, dass** der Elektromotor (52) von der Steuereinheit (44) mittels des Verfahrens nach einem der Ansprüche 1 bis 11 angesteuert wird.

12. Lenkeinrichtung (10, 100, 101) nach Anspruch 12, **dadurch gekennzeichnet, dass** die Einrichtung (40, 400, 401) zur Verstärkung der Lenkkraft einen Kugelumlaufmechanismus (54) aufweist, wobei der Elektromotor (54, 540, 541) zum Antrieb des Kugelumlaufmechanismus (54) vorgesehen ist und wobei durch eine Drehbewegung des Kugelumlaufmechanismus (54) die Lenkstange (20) zusätzlich zu der Drehbewegung des Lenkrads (12) axial antreibbar ist.

13. Lenkeinrichtung (10, 100, 101) nach Anspruch 12, **dadurch gekennzeichnet, dass** die Einrichtung (40, 400, 401) zur Verstärkung der Lenkkraft ein Getriebe (541) aufweist, wobei der Elektromotor (54, 540, 541) zum Antrieb des Getriebes (541) vorgesehen ist und wobei über das Getriebe (541) das Zahnradgetriebe (18) zusätzlich zu der Drehbewegung des Lenkrads (12) axial antreibbar ist.

14. Lenkeinrichtung (10, 100, 101) nach Anspruch 12 **dadurch gekennzeichnet, dass** die Einrichtung (40, 400, 401) zur Verstärkung der Lenkkraft ein Schneckengetriebe (560) aufweist, wobei der Elektromotor (54, 540, 541) zum Antrieb des Schneckengetriebes (560) vorgesehen ist, wobei über das Schneckengetriebe die Lenkwelle (16) zusätzlich zu der Drehbewegung des Lenkrads (12) axial antreibbar ist.

## Claims

1. Method for operating a steering device (10, 100, 101) having a device (400) for boosting the steering force, in particular for a motor vehicle, in which a steering rod (20) is driven axially by means of a rotary movement of a steering wheel (12) via a steering shaft (16) and a gear mechanism (18), at least one mechanical parameter (P) of the steering device (10, 100, 101) being sensed by a sensor unit (28) and being transferred to a control unit (44) which comprises an arithmetic module (50) and a storage module (52), and an electric motor (54, 540, 541) which is assigned to the device (400) for boosting the steering force is actuated by the control unit (44) in order to drive the steering rod (20) indirectly or directly, at least one electrical parameter (E) for the electric motor (54, 540, 541) being determined in the arithmetic module (50) as a function of the at least one mechanical parameter (P), **characterized in that** the electric motor is actuated on the basis of the at least one sensed mechanical parameter (P) and one motor module which is stored in the control unit (44) **in that** in turn constants ($K_I$) and ($K_N$) are determined from the at least one electrical parameter (E) with the additional use of characteristic values W, the characteristic values W characterizing the operating behaviour of the electric motor and the actuation variable which is to be fed to the electric motor (54, 540, 541) is then calculated by means of the constants ($K_I$) and ($K_N$) and data (D) which is stored in the storage module (52).

2. Method for operating a steering device (10, 100, 101) according to Claim 1, **characterized in that** a voltage ($U_M$) which is fed to the electric motor (54, 540, 541) by means of a voltage source (58) is calculated by means of the control unit (44).

3. Method for operating a steering device (10, 100, 101) according to Claim 1 or 2, **characterized in that** the at least one electrical parameter (E) is the setpoint current ($I_{Soll}$) for the electric motor (54, 540, 541).

4. Method for operating a steering device (10, 100, 101) according to one of Claims 1 to 3, **characterized in that**, apart from the electrical parameter (E), a further parameter (E), in particular a mechanical parameter (E), is additionally determined for the electric motor (54, 540, 541).

5. Method for operating a steering device (10, 100, 101) according to Claim 4, **characterized in that** the additional parameter (E), in particular a mechanical parameter (E) is the setpoint rotational speed ($N_{Soll}$) for the electric motor (54, 540, 541).

6. Method for operating a steering device (10, 100, 101) according to one of Claims 1 to 5, **characterized in that** the at least one mechanical parameter (P) of the steering device (10, 100, 101) is the steering torque ($T_L$) of the steering wheel (12) and the steering speed ($N_L$) of the steering wheel (12).

7. Method for operating a steering device (10, 100, 101) according to one of Claims 1 to 6, **characterized in that** the stored data (D) is nominal value curves.

8. Method for operating a steering device (10, 100, 101) according to Claim 7, **characterized in that**, in the arithmetic module (50), an addition of the products for calculating the voltage ($U_M$) which is to be generated for the electric motor (54, 540, 541) in the voltage source (46) is carried out after the constants ($K_I$) and ($K_N$) have been multiplied by the rated value curves.

9. Method for operating a steering device (10, 100, 101) as claimed in Claim 9, **characterized in that** a characteristic value (W) of the electric motor (54, 540, 541) is the operating voltage ($U_B$) of the electric motor (54, 540, 541).

10. Method for operating a steering device (10, 100, 101) according to Claim 9 or 10, **characterized in that** a characteristic value (W) of the electric motor (54, 540, 541) is the temperature (T) of the electric motor (54, 540, 541).

11. Steering device (10, 100, 101) having a device (40, 400, 401) for boosting the steering force, in particular for a motor vehicle, in which a steering rod (20) can be driven axially by means of a rotary movement of a steering wheel (12) via a steering shaft (16) and a gear mechanism (18), it being possible for at least one mechanical parameter (P) of the steering wheel (12), of the gear mechanism (18) or of the steering rod (20) to be sensed by a sensor unit (28) and to be transferred to a control unit (44), an electric motor (54, 540, 541) which is assigned to the device (40, 400, 401) for boosting the steering force being capable of being actuated by the control unit (44) in order to drive the steering rod (20) indirectly or directly, **characterized in that** the electric motor (52) is actuated by the control unit (44) by means of the method according to one of Claims 1 to 11.

12. Steering device (10, 100, 101) according to Claim 12, **characterized in that** the device (40, 400, 401) for boosting the steering force has a circulating ball mechanism (54), the electric motor (54, 540, 541) being provided to drive the circulating ball mechanism (54), and the steering rod (20) being capable of being driven axially by a rotary movement of the circulating ball mechanism (54), in addition to the rotary movement of the steering wheel (12).

13. Steering device (10, 100, 101) according to Claim 12, **characterized in that** the device (40, 400, 401) has a gear mechanism (541) for boosting the steering force, the electric motor (54, 540, 541) being provided to drive the gear mechanism (541), and the gear mechanism (18) being capable of being driven axially by means of the gear mechanism (541), in addition to the rotary movement of the steering wheel (12).

14. Steering device (10, 100, 101) according to Claim 12, **characterized in that** the device (40, 400, 401) for boosting the steering force has a worm gear mechanism (560), the electric motor (54, 540, 541) being provided to drive the worm gear mechanism (560), the steering shaft (16) being capable of being driven axially by means of the worm gear mechanism, in addition to the rotary movement of the steering wheel (12).

**Revendications**

1. Procédé de mise en oeuvre d'un dispositif de direction (10, 100, 101) avec un dispositif (400) pour augmenter l'effort de braquage, notamment pour un véhicule automobile, dans lequel une bielle de direction (20) est entraînée a xialement au moyen d'un mouvement de rotation d'un volant (12) par le biais d'un arbre de direction (16) et d'une transmission par engrenages (18), au moins un paramètre mécanique (P) du dispositif de direction (10, 100, 101) étant saisi par une unité de détection (28) et étant transmis à une unité de commande (44) qui comprend un module de calcul (50) et un module de mémoire (52) et un moteur électrique (54, 540, 541) associé au dispositif (400) pour augmenter l'effort de braquage et destiné à l'entraînement indirect ou direct de la bielle de direction (20) étant commandé par l'unité de commande (44), au moins un paramètre électrique (E) pour le moteur électrique (54, 540, 541) étant déterminé, dans le module de calcul (50), en fonction du - au moins un - paramètre mécanique (P), **caractérisé en ce que** l'on commande le moteur électrique sur la base du - au moins un - paramètre mécanique (P) saisi et d'un modèle de moteur du moteur électrique déposé dans l'unité de commande (44), en déterminant d'autre part des constantes ($K_I$) et ($K_N$) à partir du - au moins un - paramètre électrique (E) en ayant recours à des valeurs caractéristiques W, les valeurs caractéristiques W caractérisant le comportement en service du moteur électrique, et en calculant ensuite, au moyen des constantes ($K_I$) et ($K_N$) et de données (D) enregistrées dans le module de mémoire (52), la grandeur de commande qui doit être appliquée au moteur électrique (54, 540, 541).

2. Procédé de mise en oeuvre d'un dispositif de direction (10, 100, 101) selon la revendication 1, **caractérisé en ce que** l'on calcule, au moyen de l'unité de commande (44), une tension ($U_M$) qui est appliquée au moteur électrique (54, 540, 541) au moyen d'une source de tension (58).

3. Procédé de mise en oeuvre d'un dispositif de direction (10, 100, 101) selon la revendication 1 ou 2, **caractérisé en ce que** l'au moins un paramètre électrique (E) est le courant de consigne ($I_{Soll}$) pour le moteur électrique (54, 540, 541).

4. Procédé de mise en oeuvre d'un dispositif de direction (10, 100, 101) selon l'une des revendications 1 à 3, **caractérisé en ce que** l'on détermine encore un autre paramètre (E), notamment mécanique, pour le moteur électrique (54, 540, 541) en plus du paramètre électrique (E).

5. Procédé de mise en oeuvre d'un dispositif de direction (10, 100, 101) selon la revendication 4, **caractérisé en ce que** le paramètre supplémentaire (E), notamment mécanique, est la vitesse de rotation de consigne ($N_{Soll}$) pour le moteur électrique (54, 540, 541).

6. Procédé de mise en oeuvre d'un dispositif de direction (10, 100, 101) selon l'une des revendications 1 à 5, **caractérisé en ce que** l'au moins un paramètre mécanique (P) du dispositif de direction (10, 100, 101) consiste en le couple de rotation directionnelle ($T_L$) du volant (12) et la vitesse de rotation directionnelle ($N_L$) du volant (12).

7. Procédé de mise en oeuvre d'un dispositif de direction (10, 100, 101) selon l'une des revendications 1 à 6, **caractérisé en ce que** les données enregistrées (D) sont des courbes nominales.

8. Procédé de mise en oeuvre d'un dispositif de direction (10, 100, 101) selon la revendication 7, **caractérisé en ce que**, après une multiplication des constantes ($K_I$) et ($K_N$) par les courbes nominales, une addition des produits est réalisée, dans le module de calcul (50), pour calculer la tension ($U_M$) qui doit être générée dans la source de tension (46) pour le moteur électrique (54, 540, 541 ).

9. Procédé de mise en oeuvre d'un dispositif de direction (10, 100, 101) selon la revendication 9, **caractérisé en ce qu'**une valeur caractéristique (W) du moteur électrique (54, 540, 541) est la tension de service ($U_B$) du moteur électrique (54, 540, 541).

10. Procédé de mise en oeuvre d'un dispositif de direction (10, 100, 101) selon la revendication 9 ou 10, **caractérisé en ce qu'**une valeur caractéristique (W) du moteur électrique (54, 540, 541) est la température (T) du moteur électrique (54, 540, 541).

11. Dispositif de direction (10, 100, 101) avec un dispositif (40, 400, 401) pour augmenter l'effort de braquage, notamment pour un véhicule automobile, dans lequel une bielle de direction (20) peut être entraînée axialement au moyen d'un mouvement de rotation d'un volant (12) par le biais d'un arbre de direction (16) et d'une transmission par engrenages (18), au moins un paramètre mécanique (P) du volant (12), de la transmission par engrenages (18) ou de la bielle de direction (20) pouvant être saisi par une unité de détection (28) et pouvant être transmis à une unité de commande (44), u n moteur é lectrique (54, 540, 541) associé au dispositif (40, 400, 401) pour augmenter l'effort de braquage et destiné à l'entraînement indirect ou direct de la bielle de direction (20) pouvant être commandé par l'unité de commande (44), **caractérisé en ce que** le moteur électrique (52) est commandé par l'unité de commande (44) au moyen du procédé selon l'une des revendications 1 à 11.

12. Dispositif de direction (10, 100, 101) selon la revendication 12, **caractérisé en ce que** le dispositif (40, 400, 401) pour augmenter l'effort de braquage comprend un mécanisme à recirculation de billes (54), le moteur électrique (54, 540, 541) étant prévu pour entraîner le mécanisme à recirculation de billes (54) et la bielle de direction (20) pouvant être entraînée axialement par un mouvement de rotation du mécanisme à recirculation de billes (54) en plus du mouvement de rotation du volant (12).

**13.** Dispositif de direction (10, 100, 101) selon la revendication 12, **caractérisé en ce que** le dispositif (40, 400, 401) pour augmenter l'effort de braquage comprend un engrenage (541), le moteur électrique (54, 540, 541) étant prévu pour entraîner l'engrenage (541) et la transmission par engrenages (18) pouvant être entraînée axialement par le biais de l'engrenage (541) en plus du mouvement de rotation du volant (12).

**14.** Dispositif de direction (10, 100, 101) selon la revendication 12, **caractérisé en ce que** le dispositif (40, 400, 401) pour augmenter l'effort de braquage comprend un engrenage à vis sans fin (560), le moteur électrique (54, 540, 541 ) étant prévu pour entraîner l'engrenage à vis sans fin (560), l'arbre de direction (16) pouvant être entraîné axialement par le biais de l'engrenage à vis sans fin en plus du mouvement de rotation du volant (12).

**Fig. 1**

**Fig. 2**

Fig. 3

Erfassung von P: $T_L$ und $N_L$

Ermittlung von E: $I_{SOLL}$ und $N_{SOLL}$

Bestimmung von $K_I$ und $K_N$ mittels W

Bestimmung von $I_M$ aus $K_I$, $K_N$ und D

Erzeugung von $I_M$

Ansteuerung mit $I_M$

# Fig. 4